# EUROPÄISCHE PATENTSCHRIFT

(11) **EP 1 040 962 B1**
(45) Veröffentlichungstag und Bekanntmachung des Hinweises auf die Patenterteilung: **23.11.2005**
(21) Anmeldenummer: 00106293.4
(22) Anmeldetag: 23.03.2000
(51) Int. Cl.: B60R 1/04, B60R 1/12, B60S 1/08

(54) **Innenrückblickspiegel für Fahrzeuge, insbesondere Kraftfahrzeuge**
Interior rear view mirror for vehicles, especially motor vehicles
Rétroviseur intérieur pour véhicules, en particulier véhicules à moteur

(30) Priorität: 01.04.1999 DE 29906013 U
(43) Veröffentlichungstag der Anmeldung: 04.10.2000
(73) Patentinhaber: Schefenacker Vision Systems Germany GmbH, 73730 Esslingen (DE)
(72) Erfinder: Mertens, Jens, 70374 Stuttgart (DE); Rommel, Bernd, 70736 Fellbach (DE)
(74) Vertreter: Kohl, Karl-Heinz

(56) Entgegenhaltungen:
- EP-A- 0 461 424
- EP-A- 0 512 653
- EP-A- 0 928 723
- DE-A- 4 214 223
- US-A- 4 871 917
- US-A- 4 930 742
- US-A- 5 058 851
- US-A- 5 820 097
- "COMBINATION OF RAIN SENSING, AUTOLAMPS AND TELEPHONE ANTENNA IN ONEMODULE" RESEARCH DISCLOSURE, KENNETH MASON PUBLICATIONS, HAMPSHIRE, GB, Nr. 412, August 1998 (1998-08), Seite 1045 XP000824825 ISSN: 0374-4353

## Beschreibung

Die Erfindung betrifft einen Innenrückblickspiegel für Fahrzeuge, insbesondere Kraftfahrzeuge, nach dem Oberbegriff des Anspruches 1.

Solche Innenrückblickspiegel werden mit dem Spiegelfuß entweder an der Windschutzscheibe des Fahrzeuges angeklebt oder am Dach des Fahrzeuges beispielsweise mit Schrauben befestigt.

Es ist bekannt (EP-A-0 928 723) , ein Art 54(3) EPÜ Dokument , den Spiegelfuß an seinem der Windschutzscheibe zugewandten Ende mit einer Aufnahme für einen Regensensor zu versehen. Er liegt mit seiner Kontaktfläche an der Innenseite der Windschutzscheibe an und wird durch Federkraft gegen die Windschutzscheibe gedrückt. Die hierfür vorgesehene Druckfeder ist in der Kammer des Spiegelfußes untergebracht.

Bei einem anderen bekannten, gattungsbildenden Innenrückblickspiegel (DE-A-42 14 223) ist an dem der Windschutzscheibe zugewandten Ende des Spiegelfußes eine Kammer vorgesehen, in der ein Regensensor untergebracht ist. Der Spiegelfuß sowie der Regensensor werden an die Innenseite der Windschutzscheibe angeklebt.

Der Erfindung liegt die Aufgabe zugrunde, den gattungsgemäßen Innenrückblickspiegel so auszubilden, daß er zusammen mit dem Regensensor einfach am Fahrzeug gehalten werden kann.

Diese Aufgabe wird beim gattungsgemäßen Innenrückblickspiegel erfindungsgemäß mit den kennzeichnenden Merkmalen des Anspruches 1 gelöst.

Beim erfindungsgemäßen Innenrückblickspiegel wird der Regensensor über den Spiegelfuß und das Spann/Halteelement gegen die Windschutzscheibe des Fahrzeuges gedrückt. Das Spann/Halteelement ist mit seinen abgewinkelten, Rastabschnitte bildenden Enden in Vertiefungen einer ringförmigen Grundplatte gehalten, die an der Windschutzscheibe befestigt ist und in die der Regensensor eingreift. Zur Befestigung des Innenrückblickspiegels und des Regensensors sind nicht zwei Befestigungsstellen erforderlich; vielmehr können mit dem Spann/Halteelement sowohl der Spiegelfuß als auch der Regensensor an der Grundplatte gehalten werden. Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: einen an einer Windschutzscheibe eines Kraftfahrzeuges befestigten erfindungsgemäßen Innenrückblickspiegel,
- Fig. 2: in perspektivischer Darstellung den Befestigungsbereich des Innenrückblickspiegels gemäß Fig. 1,
- Fig. 3: teilweise in Ansicht und teilweise im Schnitt den erfindungsgemäßen Innenrückblickspiegel in einer ersten Phase seiner Befestigung,
- Fig. 4: in einer Darstellung entsprechend Fig. 3 den Innenrückblickspiegel in montierter Lage.

An der Innenseite einer Windschutzscheibe 1 eines Kraftfahrzeuges ist eine Grundplatte 20 befestigt. Sie ist ringförmig ausgebildet und weist eine im wesentlichen rechteckige Form auf. Durch diesen Ring hindurch wird ein Regensensor 8 in noch zu beschreibender Weise gegen die Windschutzscheibe 1 des Fahrzeuges gedrückt. Der Regensensor 8 hat die Aufgabe, die Scheibenwischer des Kraftfahrzeuges entsprechend der auf die Windschutzscheibe 1 fallenden Regenmenge automatisch einzuschalten.

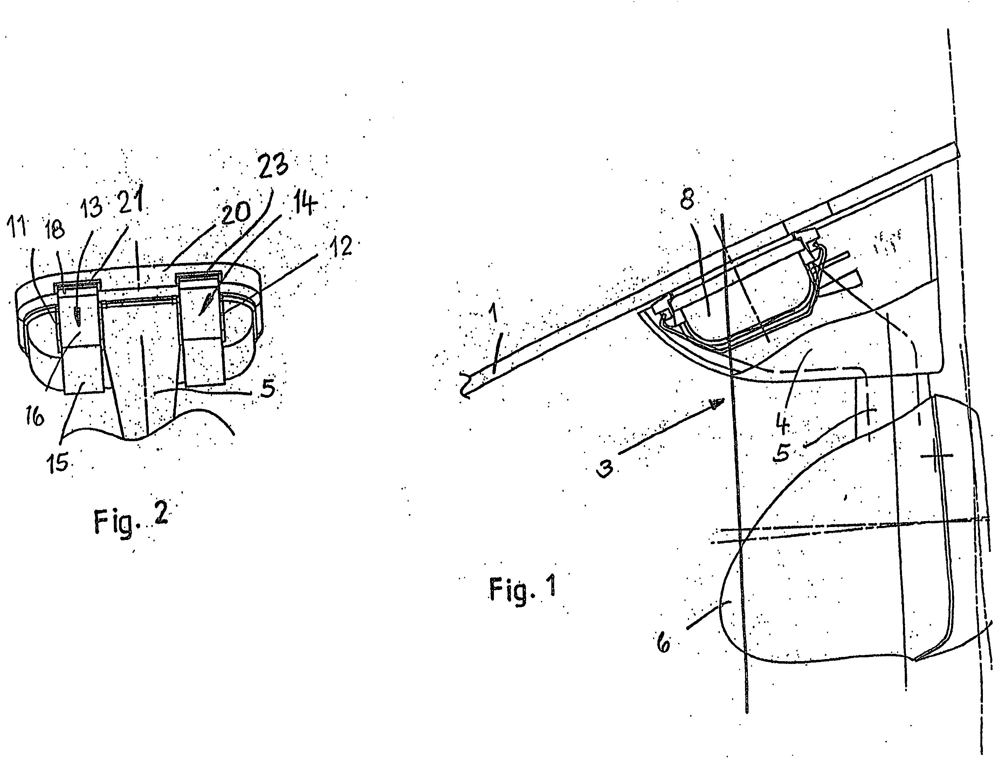

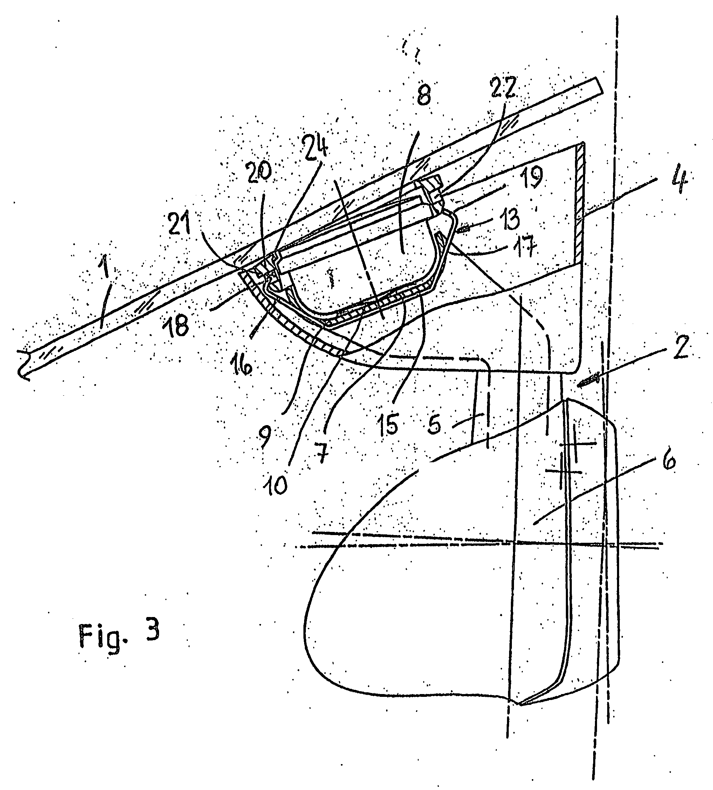

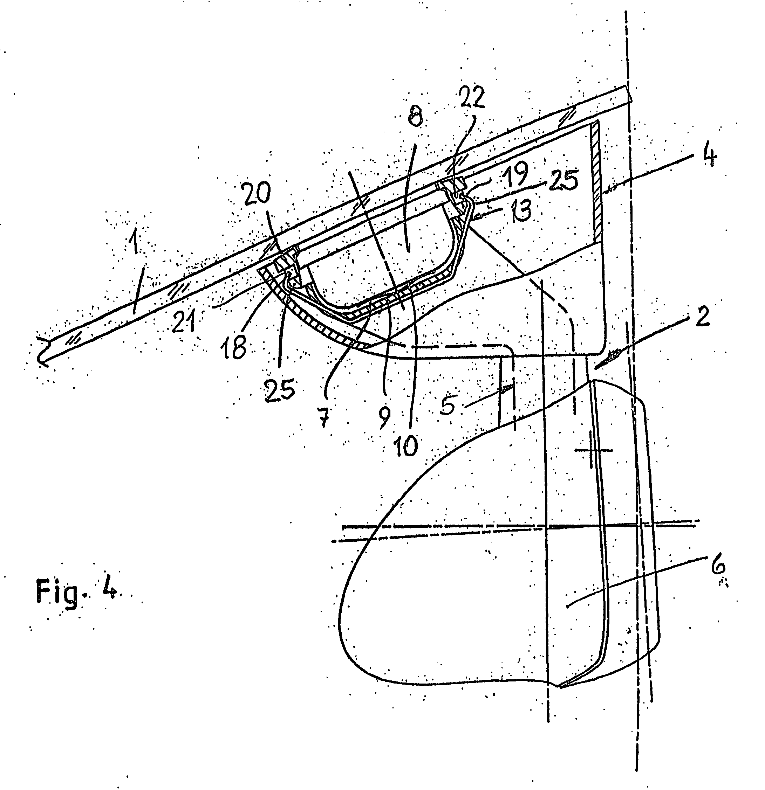

Die Grundplatte 20 dient zur Halterung und Abstützung eines Innenrückblickspiegels 3. Er hat einen Spiegelfuß 2 mit einer Verkleidung 4, an dem über einen Arm 5 ein Spiegelkopf 6 gehalten ist. Er weist das (nicht dargestellte) Spiegelglas auf und ist gegenüber dem Arm 5 in bekannter Weise verstellbar. Die Umkleidung 4 des Spiegelfußes 2 ist hohl ausgebildet und nimmt in der Einbaulage (Fig. 1 und 4) den etwa topfförmigen Regensensor 8 auf. Dadurch ist der Regensensor 8 vom Fahrzeuginnenraum aus nicht sichtbar. Die Umkleidung 4 ist, wie sich aus den Fig. 3 und 4 ergibt, haubenförmig ausgebildet und hat etwa dreieckförmigen Querschnitt. Der Arm 5 ragt in die Umkleidung 4, in der er in noch zu beschreibender Weise an der Grundplatte 20 befestigt ist.

Wie die Fig. 3 und 4 zeigen, ist der Arm 5 an seinem innerhalb der Verkleidung 4 liegenden Ende mit einer Vertiefung 7 versehen, deren Querschnittsform dem Regensensor 8 angepaßt ist. Die Vertiefung 7 hat im dargestellten Ausführungsbeispiel U-förmigen Querschnitt. Zwischen dem Boden 9 der Vertiefung 7 und dem Regensensor 8 befindet sich wenigstens eine Wellenfeder 10, die in der Einbaulage des Innenrückblickspiegels 3 elastisch verformt ist. Mit seinem die Vertiefung 7 aufweisenden Ende übergreift der Arm 5 innerhalb der Verkleidung 4 den Regensensor 8. Am freien Ende des Armes 5 stehen an beiden Seiten senkrecht Querstücke 11, 12 ab (Fig. 2), die vorteilhaft gleiche Umrißform haben wie die Vertiefung 7 des Armes 5. Dadurch übergreifen die Querstücke 11, 12 den Regensensor 8 in gleicher Weise wie der zwischen den Querstücken befindliche Armteil. Die Querstücke 11, 12 haben im Querschnitt U-Form und dienen zur Aufnahme von jeweils einem Spann/Halteelement 13, 14. Die Spann/Halteelemente 13, 14 sind bandförmig und federelastisch ausgebildet und haben einen ebenen Mittelabschnitt 15 (Fig. 3), der an beiden Enden stumpfwinklig in schräg nach außen gerichtete Schenkel 16 und 17 übergeht. Die freien Enden 18, 19 der vom Mittelabschnitt 15 aus divergierenden Schenkel 16, 17 sind schräg in Richtung zueinander abgewinkelt.

Die Grundplatte 20 hat einen umlaufenden verdickten Rand, mit dem sie an der Innenseite der Windschutzscheibe 1 angeklebt ist. In Höhe der Spann/Halteelemente 13, 14 ist der Rand der Grundplatte 20 mit entsprechend breiten Vertiefungen 21 bis 23 versehen, in welche die abgewinkelten freien Enden 18, 19 der Spann/Halteelemente 13, 14 in montierter Lage des Innenrückblickspiegels 3 eingreifen.

Zumindest im Bereich der Vertiefungen 21 bis 23 ist der dem Arm 5 zugewandte Teil 25 des umlaufenden Randes der Grundplatte 20 abgerundet (Fig. 3 und 4). Dadurch lassen sich die Spann/Halteelemente 13, 14 mit ihren abgewinkelten Enden 18, 19 einfach in die Vertiefungen 21 bis 23 einsetzen. Die Querstücke 11, 12 haben eine an die Breite der Spann/Halteelemente 13, 14 angepaßte Querschnittsbreite. Dadurch sind die Spann/Halteelemente 13, 14 quer zu ihrer Längsrichtung durch die Schenkel der U-förmigen Querstücke 11, 12 lagegesichert. Die Montage des Innenrückblickspiegels 3 wird dadurch erheblich vereinfacht. Der Spiegelfuß 2 läßt sich mühelos so an die Grundplatte 20 ansetzen, daß die abgewinkelten Enden 18, 19 der Spann/Halteelemente 13, 14 zuverlässig in die Vertiefungen 21 bis 23 im Rand der Grundplatte 20 gelangen.

Wie sich aus Fig. 3 ergibt, wird der Spiegelfuß 2 schräg an den Rand der an der Innenseite der Windschutzscheibe 1 bereits montierten Grundplatte 20 angesetzt. Zuvor wird der Regensensor 8 in die Vertiefung 7 des Armes 5 des Spiegelfußes 2 eingelegt. Die abgewinkelten Enden 18 der beiden beiderseits des Tragarmes 5 liegenden Spann/Halteelemente 13, 14 greifen hierbei in die Vertiefungen 21, 23 im Rand der Grundplatte 20 ein. Die anderen Enden 19 der Spann/Halteelemente 13, 14 liegen außerhalb der Vertiefungen 22 am abgerundeten Teil 25 des Randes der Grundplatte 20 an (Fig. 3). In dieser Lage liegt der Spiegelfuß 2 schräg zur Windschutzscheibe 1.

Um den Innenrückblickspiegel 3 in seine montierte Endlage zu bringen, wird der Spiegelfuß 2 entgegen dem Uhrzeigersinn in Richtung auf die Windschutzscheibe 1 geschwenkt. Hierbei gleitet das abgewinkelte Ende 19 der Spann/Halteelemente 13, 14 längs des im Querschnitt abgerundeten Bereiches des Randes der Grundplatte 20, bis die abgewinkelten Enden 19 in die Vertiefungen 22 im Rand der Grundplatte 20 einrasten (Fig. 4). Beim beschriebenen Schwenkvorgang des Spiegelfußes 2 werden die Spann/Halteelemente 13, 14 elastisch aufgeweitet, bis die abgewinkelten Enden 19 in die Vertiefungen 22 der Grundplatte 20 einrasten können. Während des Schwenkvorganges bleiben die anderen abgewinkelten Enden 18 der Spann/Halteelemente 13, 14 in Eingriff mit den Vertiefungen 21. Die Spann/Halteelemente 13, 14 sind so ausgebildet, daß sie in montierter Lage elastisch verformt sind, so daß der Innenrückblickspiegel 3 sicher an der Grundplatte 20 gehalten ist. Hierzu trägt auch die zwischen dem Regensensor 8 und dem Boden 9 der Vertiefung 7 liegende Wellenfeder 10 bei, die bei montiertem Innenrückblickspiegel 3 durch den angelegten Regensensor 8 elastisch verformt ist. Aufgrund der Vorspannung der Wellenfedern 10 liegt der Regensensor 8 mit seiner balligen Oberseite fest an der Windschutzscheibe 1 an.

Aufgrund der beschriebenen Schwenkbewegung bei der Montage des Innenrückblickspiegels 3 wird der Regensensor 8 nicht auf der Windschutzscheibe 1 verschoben, so daß nicht die Gefahr einer Beschädigung des empfindlichen Regensensors besteht. Durch die Schwenkbewegung ist ein blasenfreies Andrücken der vorzugsweise aus Silikon bestehenden Verbindungsschicht des Regensensors 8 an die Windschutzscheibe 1 sichergestellt.

Die Verkleidung des Spiegelfußes hat in montierter Lage (Fig. 4) geringen Abstand von der Windschutzscheibe 1. Der Regensensor 8, das entsprechende Ende des Armes 5 mit den Querstücken 11, 12 und die Spann/Halteelemente 13, 14 liegen verdeckt innerhalb der haubenförmigen Umkleidung 4, die vorteilhaft aus Kunststoff besteht.

Die in Richtung auf den Arm 5 an die schmalen Vertiefungen 21 bis 23 anschließenden Randabschnitte 25 des Randes der Grundplatte 20 sind im Querschnitt abgerundet oder schräg verlaufend vorgesehen, so daß die entsprechenden freien Enden 18, 19 der Spann/Halteelemente 13, 14 längs dieser Randabschnitte 25 bei der Schwenkbewegung des Innenrückblickspiegels 3 leicht in die entsprechenden Vertiefungen 21 bis 23 gelangen können. Die freien Enden 18, 19 sind etwa rechtwinklig oder unter einem geringfügig größeren Winkel zu den anschließenden Schenkeln 16, 17 der Spann/Halteelemente 13, 14 vorgesehen, so daß der Innenrückblickspiegel 3 über diese Enden 18, 19 sicher in den Vertiefungen 21 bis 23 der Grundplatte gehalten wird. Die Verkleidung 4 ist mit dem Arm 5 selbstverständlich fest verbunden. Lediglich der Spiegelkopf 6 kann zur Einstellung auf den Fahrer in bekannter Weise gegenüber dem Arm 5 und damit gegenüber dem Spiegelfuß 4 verstellt werden.

## Patentansprüche

1. Innenrückblickspiegel für Fahrzeuge, insbesondere Kraftfahrzeuge, mit einem Spiegelfuß (2), der mit einem ein Spiegelglas aufweisenden Spiegelkopf (6) verbunden und an dem mindestens ein Regensensor (8) vorgesehen ist, der an der Windschutzscheibe (1) des Fahrzeuges anliegt und in einer Vertiefung (7) des Spiegelfußes (2) untergebracht ist,
**dadurch gekennzeichnet, daß** der Regensensor (8) durch wenigstens ein bügelförmiges, am Spiegelfuß (2) gehaltenes spann/Halteelement (13, 14) gegen die Windschutzscheibe (1) gedrückt ist, das den Regensensor (8) übergreift und an seinen beiden Enden abgewinkelte Rastabschnitte (18, 19) aufweist, die in Vertiefungen (21 bis 23) einer ringförmigen Grundplatte (20) eingreifen, die an der Windschutzscheibe (1) befestigt ist und In die der Regensensor (8) eingreift.

2. Innenrückblickspiegel nach Anspruch 1,
**dadurch gekennzeichnet, daß** der Spiegelfuß (2) mit einem in eine Verkleidung (4) des Spiegelfußes ragenden Arm (5) versehen ist, an dem der Spiegelkopf (6) gelagert ist.

3. Innenrückblickspiegel nach Anspruch 2.
**dadurch gekennzeichnet, daß** der Arm (5) das Spann/Halteelement (13, 14) aufweist.

4. Innenrückblickspiegel nach Anspruch 2 oder 3,
**dadurch gekennzeichnet, daß** das Spann/Halteelement (13, 14) in einem Lager des Armes (5) aufgenommen ist.

5. Innenrückblickspiegel nach Anspruch 4,
**dadurch gekennzeichnet, daß** das Lager durch wenigstens ein Querstück (11, 12) des Armes (5) gebildet ist.

6. Innenrückblickspiegel nach Anspruch 4 oder 5,
**dadurch gekennzeichnet, daß** der Arm (5) an einem Ende zwei quer abstehende Querstücke (11, 12) aufweist.

7. Innenrückblickspiegel nach Anspruch 5 oder 6,
**dadurch gekennzeichnet, daß** das Querstück (11, 12) U-förmigen Querschnitt hat.

8. Innenrückblickspiegel nach Anspruch 6 oder 7,
**dadurch gekennzeichnet, daß** die beiden Querstücke (11, 12) beiderseits des Armes (5) liegen.

9. Innenrückblickspiegel nach einem der Ansprüche 1 bis 8,
**dadurch gekennzeichnet, daß** das Spann/Halteelement (13, 14) federelastisch ausgebildet ist.

10. Innenrückblickspiegel nach einem der Ansprüche 1 bis 9,
**dadurch gekennzeichnet, daß** das Spann/Halteelement (13, 14) bandförmig ausgebildet ist.

11. Innenrückblickspiegel nach einem der Ansprüche 1 bis 10,
**dadurch gekennzeichnet, daß** der Spiegelfuß (2) unter der Kraft des Spann/Halteelementes (13, 14) gegen die Grundplatte (20) gezogen wird.

12. Innenrückblickspiegel nach einem der Ansprüche 1 bis 11,
**dadurch gekennzeichnet, daß** der durch das Spann/Haltelement (13, 14) auf den Spiegelfuß (2) ausgeübten Zugkraft eine kleinere Druckkraft entgegenwirkt, die durch wenigstens eine zwischen dem Regensensor (8) und dem Arm (5) vorgesehene Feder (10) erzeugt wird.

13. Innenrückblickspiegel nach einem der Ansprüche 1 bis 12,
**dadurch gekennzeichnet, daß** der in Richtung auf den Spiegelkopf (6) an die Vertiefungen (21 bis 23) anschließende Bereich (25) der Grundplatte (20) so ausgebildet ist, daß das an ihr anliegende Ende (18, 19) des Spann/Halteelementes (13, 14) in die entsprechende Vertiefung (21 bis 23) bei einer Schwenkbewegung des Innenrclckblickspiegels (3) während seiner Montage rutscht.

14. Innenrückblickspiegel nach Anspruch 13,
**dadurch gekennzeichnet, daß** der in Richtung auf den Spiegelkopf (6) an die Vertiefungen (21 bis 23) anschließende Bereich (25) der Grundplatte (20) im Querschnitt gekrümmt oder geneigt verläuft.

15. Innenrückblickspiegel nach einem der Ansprüche 1 bis 14,
**dadurch gekennzeichnet, daß** die Vertiefungen (21 bis 23) in einem umlaufenden Rand der Grundplatte (20) vorgesehen sind.

16. Innenrückblickspiegel nach einem der Ansprüche 2 bis 15,
**dadurch gekennzeichnet, daß** der Regensensor (8) in der Einbaulage des Innenrückblickspiegels (3) in der Verkleidung (4) des Spiegelfußes (2) liegt.

17. Innenrückblickspiegel nach einem der Ansprüche 1 bis 16,
**dadurch gekennzeichnet, daß** der Spiegelfuß (2) mit dem Spann/Halteelement (13, 14) an der Grundplatte (20) gehalten ist.

18. Innenrückblickspiegel nach einem der Ansprüche 1 bis 17,
**dadurch gekennzeichnet, daß** der Spiegelfuß (2) mit dem Spann/Halteelement (13, 14) an der Grundplatte (20) verrastet ist.

## Claims

1. Interior rear view mirror for vehicles, especially motor vehicles, with a mirror base (2), which is connected to a mirror head (6) having a mirror glass, and on which is provided at least one rain sensor (8) which bears against the windscreen (1) of the vehicle and is accommodated in a depression (7) of the mirror base (2), **characterized in that** the rain sensor (8) is pressed against the windscreen (1) by at least one bow-shaped clamping/retaining element (13, 14) which is held on the mirror base (2), engages over the rain sensor (8) and, at both of its ends, has angled latching sections (18, 19) which engage in depressions (21 to 23) of an annular base plate (20), which is fastened to the windscreen (1) and in which the rain sensor (8) engages.

2. Interior rear view mirror according to Claim 1, **characterized in that** the mirror base (2) is provided with an arm (5) which protrudes into a covering (4) of the mirror base and on which the mirror head (6) is mounted.

3. Interior rear view mirror according to Claim 2, **characterized in that** the arm (5) has the clamping/retaining element (13, 14).

4. Interior rear view mirror according to Claim 2 or 3, **characterized in that** the clamping/retaining element (13, 14) is held in a bearing of the arm (5).

5. Interior rear view mirror according to Claim 4, **characterized in that** the bearing is formed by at least one crosspiece (11, 12) of the arm (5).

6. Interior rear view mirror according to Claim 4 or 5, **characterized in that** the arm (5) has two transversely protruding crosspieces (11, 12) at one end.

7. Interior rear view mirror according to Claim 5 or 6, **characterized in that** the crosspiece (11, 12) has a U-shaped cross section.

8. Interior rear view mirror according to Claim 6 or 7, **characterized in that** the two crosspieces (11, 12) are situated on either side of the arm (5).

9. Interior rear view mirror according to one of Claims 1 to 8, **characterized in that** the clamping/retaining element (13, 14) is of spring-elastic design.

10. Interior rear view mirror according to one of Claims 1 to 9, **characterized in that** the clamping/retaining element (13, 14) is of band-shaped design.

11. Interior rear view mirror according to one of Claims 1 to 10, **characterized in that** the mirror base (2) is pulled against the base plate (20) under the force of the clamping/retaining element (13, 14).

12. Interior rear view mirror according to one of Claims 1 to 11, **characterized in that** the tensile force exerted on the mirror base (2) by the clamping/retaining element (13, 14) is opposed by a smaller compressive force which is produced by at least one spring (10) provided between the rain sensor (8) and the arm (5).

13. Interior rear view mirror according to one of Claims 1 to 12, **characterized in that that** region (25) of the base plate (20) which adjoins the depressions (21 to 23) in the direction of the mirror head (6) is designed in such a manner that that end (18, 19) of the clamping/retaining element (13, 14) which bears against it slides into the corresponding depression (21 to 23) upon a pivoting movement of the interior rear view mirror (3) during its installation.

14. Interior rear view mirror according to Claim 13, **characterized in that that** region (25) of the base plate (20) which adjoins the depressions (21 to 23) in the direction of the mirror head (6) has a curved or inclined profile in cross section.

15. Interior rear view mirror according to one of Claims 1 to 14, **characterized in that** the depressions (21 to 23) are provided in a peripheral edge of the base plate (20).

16. Interior rear view mirror according to one of Claims 2 to 15, **characterized in that**, in the installed position of the interior rear view mirror (3), the rain sensor (8) is situated in the covering (4) of the mirror base (2).

17. Interior rear view mirror according to one of Claims 1 to 16, **characterized in that** the mirror base (2) is held on the base plate (20) by the clamping/retaining element (13, 14).

18. Interior rear view mirror according to one of Claims 1 to 17, **characterized in that** the mirror base (2) is latched to the base plate (20) by the clamping/retaining element (13, 14).

## Revendications

1. Rétroviseur intérieur pour véhicule, en particulier pour véhicule automobile, comportant un pied (2) relié à une tête (6) présentant un verre miroir et sur laquelle est prévu au moins un détecteur de pluie (8) qui s'applique contre le pare-brise (1) du véhicule et est logé dans un renfoncement (7) du pied (2) du rétroviseur,
**caractérisé en ce que** le détecteur de pluie (8) est pressé contre le pare-brise (1) par au moins un élément de serrage/maintien (13, 14) en forme d'arceau qui est retenu sur le pied (2) du rétroviseur, qui coiffe le détecteur de pluie (8) et qui comprend à ses deux extrémités des tronçons d'enclenchement coudés (18, 19) qui s'engagent dans des renfoncements (21 à 23) d'une plaque de base annulaire (20) qui est fixée sur le pare-brise (1) et dans laquelle s'engage le détecteur de pluie (8).

2. Rétroviseur intérieur selon la revendication 1, **caractérisé en ce que** le pied (2) du rétroviseur est pourvu d'un bras (5) qui pénètre dans un habillage (4) du pied du rétroviseur et sur lequel est montée la tête (6) du rétroviseur.

3. Rétroviseur intérieur selon la revendication 2, **caractérisé en ce que** le bras (5) comprend l'élément de serrage/maintien (13, 14).

4. Rétroviseur intérieur selon l'une ou l'autre des revendications 2 et 3, **caractérisé en ce que** l'élément de serrage/maintien (13, 14) est reçu dans un palier du bras (5).

5. Rétroviseur intérieur selon la revendication 4, **caractérisé en ce que** le palier est formé par au moins un élément transversal (11, 12) du bras (5).

6. Rétroviseur intérieur selon l'une ou l'autre des revendications 4 et 5, **caractérisé en ce que** le bras (5) comprend à une extrémité deux éléments transversaux (11, 12) qui font saillie transversalement.

7. Rétroviseur intérieur selon l'une ou l'autre des revendications 5 et 6, **caractérisé en ce que** l'élément transversal (11, 12) présente une section transversale en forme de U.

8. Rétroviseur intérieur selon l'une ou l'autre des revendications 6 et 7, **caractérisé en ce que** les deux éléments transversaux (11, 12) se trouvent de part et d'autre du bras (5).

9. Rétroviseur intérieur selon l'une des revendications 1 à 8, **caractérisé en ce que** l'élément de serrage/maintien (13, 14) est réalisé élastique à la manière d'un ressort.

10. Rétroviseur intérieur selon l'une des revendications 1 à 9, **caractérisé en ce que** l'élément de serrage/maintien (13, 14) est réalisé en forme de ruban.

11. Rétroviseur intérieur selon l'une des revendications 1 à 10, **caractérisé en ce que** le pied (2) du rétroviseur est tiré contre la plaque de base (20) sous l'effort de l'élément de serrage/maintien (13, 14).

12. Rétroviseur intérieur selon l'une des revendications 1 à 11, **caractérisé en ce que** la force de traction exercée par l'élément de serrage/maintien (13, 14) sur le pied (2) du rétroviseur est contrecarrée par une force de compression plus petite qui est générée par au moins un ressort (10) prévu entre le détecteur de pluie (8) et le bras (5).

13. Rétroviseur intérieur selon l'une des revendications 1 à 12, **caractérisé en ce que** la zone (25) de la plaque de base (20), qui se raccorde aux renfoncements (21 à 23) en direction de la tête (6) du rétroviseur est réalisée de telle sorte que l'extrémité (18, 19) de l'élément de serrage/maintien (13, 14) appliquée contre ladite plaque glisse dans le renfoncement correspondant (21 à 23) lors d'un mouvement de pivotement du rétroviseur intérieur (3) pendant son montage.

14. Rétroviseur intérieur selon la revendication 13, **caractérisé en ce que** la zone (25) de la plaque de base (20), qui se raccorde aux renfoncements (21 à 23) en direction de la tête (6) du rétroviseur, s'étend avec une section transversale incurvée ou inclinée.

15. Rétroviseur intérieur selon l'une des revendications 1 à 14, **caractérisé en ce que** les renfoncements (21 à 23) sont prévus dans une bordure périphérique de la plaque de base (20).

16. Rétroviseur intérieur selon l'une des revendications 2 à 15, **caractérisé en ce que** le détecteur de pluie (8) se trouve dans l'habillage (4) du pied (2) du rétroviseur, dans la position montée du rétroviseur intérieur (3).

17. Rétroviseur intérieur selon l'une des revendications 1 à 16, **caractérisé en ce que** le pied (2) du rétroviseur est retenu sur la plaque de base (20) par l'élément de serrage/maintien (13, 14).

18. Rétroviseur intérieur selon l'une des revendications 1 à 17, **caractérisé en ce que** le pied (2) du rétroviseur est enclenché sur la plaque de base (20) par l'élément de serrage/maintien (13, 14).
